# EUROPEAN PATENT APPLICATION

(11) **EP 4 763 944 A1**
(43) Date of publication of application: **24.06.2026**
(21) Application number: 24307175.0
(22) Date of filing: 18.12.2024
(51) Int. Cl.: C09K 9/02, G02F 1/1503

(54) **COMPOSITION FOR SWITCHABLE MIRROR DEVICES**

(71) Applicant: Essilor International, 94220 Charenton-Le-Pont (FR)
(72) Inventor: ARCHAMBEAU, Samuel, 31300 TOULOUSE (FR); HEBRARD, Elise, 31130 BALMA (FR)
(74) Representative: Plasseraud IP

(57) **Abstract**

The present invention provides a composition suitable for use in switchable mirror devices, said composition comprising, dissolved in a solvent, a reducing compound E, a metal cation Mⁿ⁺, and an organic ligand L able to form a coordination complex with Mⁿ⁺, wherein E does not spontaneously reduce oxidized metal present in the composition, and wherein L comprises the following moiety I:

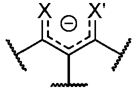

Wherein X and X' are independently selected from O, and

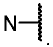

## Description

### Technical field

This disclosure belongs to the field of switchable mirror devices. Said device may be an optical lens and more particularly an ophthalmic lens.

### Background art

Switchable mirror devices, also known as reversible electrodeposition devices, are devices comprising an electrochemical cell within which a metallic mirror layer can be deposited on an electrode upon activation. Said mirror layer subsequently disappears when the device is turned off. The device thus provides a reversible mirror functionality. Applications for rear view mirrors have been disclosed, for example in document US20070195398A1.

For such devices, the quality of the mirror layer and the reversibility of the deposition are key.

The use of complexing agents (i.e. ligands), such as bipyridines or halides, for improving the quality of a mirror layer in a switchable mirror device is known, e.g. from US20070195398A1.

### Summary

It has been found that not all ligands have the same performances in switchable mirror devices as, for example, using citrate ligands did not give results as satisfying as those obtained with acac-type ligands. In document US20070195398A1, acac-type ligands are not mentioned. It has been found that acac-type ligands provide a practical alternative to the ligands mentioned in US20070195398A1. Notably, contrary to the bipyridine ligands disclosed in US20070195398A1, acac-type ligands are soluble in propylene carbonate, which is a particularly advantageous solvent. Propylene carbonate is stable, in particular to reduction or oxidation, its polar nature makes it a relatively good solvent for ions, it has a low melting point of about -50°C, which is useful for devices used in cold conditions such as ski goggles, and it has a high melting point of about 240°C, which is useful since switchable mirrors often necessitate the use of vacuum for their manufacture.

The present invention thus provides a composition for switchable mirror device based on the use of acac-type ligands. The switchable mirror devices obtained with such compositions have a quality compatible for their use as ophthalmic lenses. In such ophthalmic lens using the composition of the present invention, the deposition of the mirror layer provides an esthetically pleasing appearance and at the same time protects the eye from excessive light. Moreover, in the same state where the mirror layer provides protection and a pleasing appearance, the mirror layer remains semitransparent, such that the wearer of the ophthalmic lens has a good vision when looking through the mirror layer.

### Description

The present invention thus provides the following items and embodiments.
1. Item 1: Composition comprising, dissolved in a solvent, a reducing compound E, a metal cation Mⁿ⁺, and an organic ligand L able to form a coordination complex with Mⁿ⁺, wherein E does not spontaneously reduce oxidized metal present in the composition, and wherein L comprises the following moiety I: 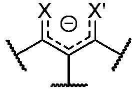 Wherein X and X' are independently selected from O, and

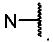

The above formula is one possible representation of moiety I. Moiety I could also be represented by the following formulas:

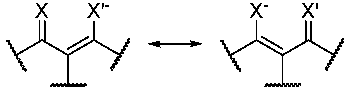

The ligand L comprises ligands such as acac, NacNac and analogous ligands with one oxygen and one nitrogen. In the present disclosure we call the class of ligands comprising the moiety I: acac-type ligands.

In the composition of the invention, the ligand L is at least partly coordinated to the metal cations Mⁿ⁺ comprised in the composition.

When used in an electrochemical cell and when applying a tension between the electrodes of the electrochemical cell, the above composition leads to the deposition of a mirror layer of M on one of the electrodes, while E is oxidized to E* at the other electrode.
2. Item 2: the composition of item 1, wherein the ligand L comprises a fluorinated, preferably polyfluorinated, more preferably perfluorinated alkyl chain.

It has been observed that the reversibility of the deposition of a mirror layer from the composition of the invention was improved when the ligand L comprised fluorinated, preferably polyfluorinated, more preferably perfluorinated alkyl chains.

Without wishing to be bound by theory, it is presumed that interactions between moiety I and the mirror layer that is deposited from the composition of the invention leads to adsorption of the ligand L on the mirror layer. The adsorption of the ligand L would hinder the redissolution of the mirror layer. In principle, the redissolution of the mirror layer is caused by the spontaneous reaction between E* and the metal of the mirror layer to give E and Mⁿ⁺. It is presumed that when the ligand L comprises electron withdrawing groups such as fluorinated alkyl chains, its adsorption on the mirror layer is weaker and the redissolution of the mirror layer therefore easier.
3. Item 3: the composition of item 1 or 2, wherein L comprises at most 2 moieties I, preferably 1 moiety I.
4. Item 4: the composition of any one of items 1 to 3, wherein moiety I has the following structure:

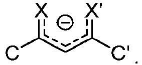

It should be understood that C and C' represent carbon atoms, which may be sp2 or sp3.
5. Item 5: the composition of item 4, wherein at least one, preferably both of C and C' are comprised in alkyl chains, preferably fluorinated, more preferably polyfluorinated, even more preferably perfluorinated alkyl chains.
6. Item 6: the composition of any one of items 1 to 5, wherein at least one of X and X', preferably both, are O.
7. Item 7: the composition of item 6, wherein the ligand L is selected from acetylacetonate (acac), trifluoroacetylacetonate (tfacac), and hexafluoroacetylacetonate (hfacac), preferably is hexafluoroacetylacetonate. Acac is 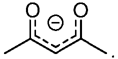 Tfacac is 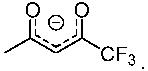 Hfacac is 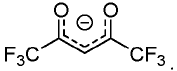
8. Item 8: the composition of any one of items 1 to 7, wherein Mⁿ⁺ is chosen from the list consisting of Cu²⁺, Ag⁺, Sn²⁺, Bi³⁺, Al³⁺, Ni³⁺, Pb³⁺, Zn²⁺, and mixtures thereof, preferably Mⁿ⁺ is Cu²⁺ or a mixture of Cu²⁺ and Sn²⁺.

E does not spontaneously reduce oxidized metal present in the composition. In particular, E does not spontaneously reduce Mⁿ⁺ or any one of the metal ions comprised in the mixture represented by Mⁿ⁺.
9. Item 9: the composition of any one of items 1 to 8, wherein E is an electrochromic compound, which may be oxidized to a compound E*.

When E is an electrochromic compound, it is possible to combine electrochromic and switchable mirror properties.
10. Item 10: the composition of item 9, wherein the maximum of the molar extinction coefficient of E* in the visible range is at least 3 times higher than the maximum of the molar extinction coefficient of E in the visible range.

When E* absorbs more in the visible than E, more of the light reflected by the mirror layer will be absorbed in the excited state and it helps reduce glare for the wearer of the switchable mirror.

It should be understood that the molar extinction coefficient is a function of the wavelength.
11. Item 11: the composition of item 10, wherein E comprises a moiety II having the following formula: 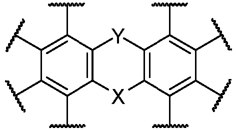 Wherein X and Y are independently selected from the list consisting of O, S, and 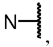 with the proviso that both X and Y cannot be O, preferably X is S and Y is 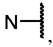 for example E is 10-methylphenothiazine.

According to this embodiment, C may be a phenazine, a phenoxazine, a phenothiazine or a thianthrene. These compounds absorb more in the visible in their oxidized state.

Advantageously, phenothiazine compounds have a relatively high reduction potential, which means that they do not easily spontaneously react with metal cations, opening up the choice of metal cations. 10-methylphenothiazine is 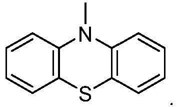 12. Item 12: the composition of any one of items 1 to 11, wherein the solvent comprises a solvent selected from the list consisting of propylene carbonate, γ-butyrolactone, dimethylsulfoxide, an ionic liquid, and mixtures thereof.

γ-Butyrolactone has properties similar to propylene carbonate. Propylene carbonate and γ-butyrolactone are thus especially suitable solvents for the composition of the invention.
13. Item 13: the composition of item 12, wherein the solvent comprises propylene carbonate, γ-butyrolactone or a combination thereof, preferably the solvent comprises at least 70% w/w of propylene carbonate, γ-butyrolactone or a combination thereof relative to the total mass of the solvent in the composition, more preferably the solvent comprises at least 90% w/w of propylene carbonate, γ-butyrolactone or a combination thereof relative to the total mass of the solvent in the composition, even more preferably the solvent is propylene carbonate, γ-butyrolactone or a combination thereof.
14. Item 14: the composition of item 13, wherein the solvent comprises propylene carbonate, preferably the solvent comprises at least 70% w/w of propylene carbonate relative to the total mass of the solvent in the composition, more preferably the solvent comprises at least 90% w/w of propylene carbonate relative to the total mass of the solvent in the composition, even more preferably the solvent is propylene carbonate.
15. Item 15: the composition of any one of items 1 to 14, wherein the composition comprises a molar amount x_{T} of metal cations, which are as oxidizing as Mⁿ⁺ or less, said metal cations having on average a positive charge n_{T}, wherein the molar amount of moiety I in the composition is x_{I}, and wherein x_{I}/x_{T} is lower than 0.95 × n_{T}, such as of 0.1 to 0.95 × n_{T}, for example of 0.15 to 0.95 × n_{T}, preferably lower than 0.85 × n_{T}, such as of 0.1 to 0.85 × n_{T}, for example of 0.15 to 0.85 × n_{T}.

When Mⁿ⁺ is a mixture of cations, it should be understood that this item concerns metal cations that are as oxidizing as or less oxidizing than the least oxidizing of the metal cations in the mixture represented by Mⁿ⁺.

According to this embodiment, the composition may or may not comprise an metal cation other than Mⁿ⁺ and may or may not comprise metal cations less oxidizing than Mⁿ⁺.

It has been observed that an excess of metal cations, which are not necessarily reduced in the mirror layer when Mⁿ⁺ starts being reduced, relative to an amount of said cations able to achieve charge balance with the moieties I improved the reversibility of the mirror layers deposited from the composition of the invention. Without wishing to be bound by theory, it is presumed that moiety I adsorbs on the mirror layer that is deposited from the composition of the invention and hinders the redissolution of the layer. In principle, the redissolution of the mirror layer is caused by the spontaneous reaction between E* and the metal of the mirror layer to give E and Mⁿ⁺. Thus, it is presumed that an excess of metal cations able to coordinate to the moieties I that are adsorbed on the mirror layer cause the desorption of said moieties I and makes it so that the mirror layer reacts more easily with E*.

The average positive charge n_{T} is a molar average. For a collection of cations M₁ⁿ¹⁺, M₂ⁿ²⁺, ..., Mᵢⁿⁱ⁺, ..., Mₚ^{np+}, in respective amounts x₁, x₂, ..., xᵢ, ..., xₚ; n_{T} is:

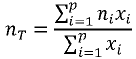

Preferably, x_{I}/x_{T} is lower than 0.85 × n_{T}, for improving the kinetics of the dissolution of the mirror layer.
16. Item 16: the composition of any one of items 1 to 15, wherein any anion in the composition other than the ligand L, when the ligand L is anionic, is a non-chelating anion, preferably is a non-chelating anion such that a fully protonated form of said anion is a strong acid, preferably wherein said anion is a non-chelating anion such that the fully protonated form of said anion is a superacid.

Any acid with a pKa value which is less than about -2 is classed as a strong acid. A superacid is an acid with an acidity greater than that of 100% pure sulfuric acid (H₂SO₄). For example, perchloric acid and triflic acid are superacids. All superacids are also strong acids.

Examples of anions, whose protonated form is superacid comprise the following anions: trifluoromethanesulfonate, perchlorate, tetrafluoroborate, hexafluorophoshate, and bistriflimide.
17. Item 17: the composition of item 15 to 16, wherein the molar amount of moiety I in the composition is x_{I}, the molar amount of Mⁿ⁺ or, where applicable, the least oxidizing of the metal cations in the mixture represented by Mⁿ⁺, in the composition is x_{M}, and x_{I}/x_{M} is lower than 0.95 × n, such as of 0.5 to 0.95 × n, for example of 0.7 to 0.95 × n, preferably lower than 0.85 × n, such as of 0.5 to 0.85 × n, for example of 0.7 to 0.85 × n.

When Mⁿ⁺ is a mixture of cations, it should be understood that n in this item represents the oxidation number of the least oxidizing of the metal cations in the mixture represented by Mⁿ⁺.

According to this item the preparation of the composition of the invention is simplified as it is can be obtained by adding two different salts of the metal cation Mⁿ⁺ to the composition: one salt with the ligand L as the only counter anion and one salt of the metal cation Mⁿ⁺ with another anion.
18. Item 18: the composition of any one of items 15 to 17, wherein the composition further comprises a metal cation Mₛ^{ns+} less oxidizing than Mⁿ⁺, preferably Mₛ^{ns+} is an alkali metal cation, more preferably Li⁺.

Here, when Mⁿ⁺ is a mixture of cations, "less oxidizing than Mⁿ⁺" means less oxidizing than the least oxidizing of the metal cations in the mixture represented by Mⁿ⁺.

According to this item the preparation of the composition of the invention is simplified as it is possible to use a salt of Mₛ^{ns+} as the supporting electrolyte. A supporting electrolyte is added to the composition when the other compounds present in the composition do not provide a satisfactory ionic conductivity, for example when there are not enough ionic species in the composition. This can be the case either in the resting state or when electric energy is applied to the composition to form the mirror layer and oxidize E to E*. Supporting electrolyte are advantageously a lithium salt but may be other metallic salts or other salts such as ionic liquids or ammonium (including alkylammonioum and tetraalkylammonium salts).
19. Item 19: the composition of item 18, wherein xₛ, the molar amount of Mₛ^{ns+}, is such that x_{I}/xₛ is below ns, such as comprised between ns/10 and nₛ, preferably below nₛ/2, such as comprised between nₛ/10 and nₛ/2, preferably below nₛ/3, such as comprised between nₛ/10 and nₛ/3.

The principal limit on how low the ratio x_{I}/xₛ can be is set by the solubility of the cation Mₛ^{ns+} in the composition. The composition may further comprise other additives, such as polymeric additives, which improve the energetic performance for the deposition of the mirror layer, as disclosed in document EP3923064A1 in the case of an electrochromic composition.
20. Item 20: the composition of any one of items 1 to 19, wherein the composition comprises 5% to 15% w/w of polyvinyl acetate relative to the total mass of the solvent and the polyvinylacetate.
21. Item 21: the composition of item 20, wherein the polyvinyl acetate has a mass average molecular weight of 200000 to 1000000 g/mol preferably of 300000 to 800000 g/mol as measured by size exclusion chromatography.

One preferred example of thickening polymer useful for the present invention is the polyvinyl acetate sold under the name Vinnapas UW10FS sold by Wacker having a mass average molecular weight of 410,000 g/mol measured by Size Exclusion Chromatography (SEC).
22. Item 22: A device comprising a first face, a second face, and an electrochemical cell, said electrochemical cell comprising a shell defining a chamber, said chamber comprising the electroactive composition according to any one of items 1 to 21,
wherein, there is an optical path that successively:
   - crosses the first face of the device at a point P1,
   - crosses a first part of the shell,
   - crosses a second part of the shell, and
   - crosses the second face of the device at a point P2;
wherein a first electrode comprises the first part of the shell and a second electrode comprises the second part of the shell,
said device further comprising means to apply a tension between the first and the second electrodes, said means being configured to be able to maintain the electrochemical cell in at least two different states S0 and S1;
wherein:
   - In S0, no electric energy is applied to the electrochemical cell, and
   - In S1, an electric tension U1 is applied such that at least part of compound E present in S0 is oxidized in the compound E* and at least part of Mⁿ⁺ present in S0 is reduced to form a mirror layer comprising the metal M on either the first electrode or the second electrode and covering the first part of the shell or the second part of the shell, respectively.

Such a device can function as a switchable mirror. In S0, Mⁿ⁺ is in solution and in S1, it is reduced and deposited as a mirror layer on one of the electrodes.

It should be understood that the faces of the device are the outside surfaces of the device. They can be seen by an outside observer looking at the device.

Since there is an optical path that successively crosses the first face of the device, crosses a first part of the shell, crosses a second part of the shell, and crosses the second face of the device, it means that light can pass through the device by following said optical path and that the device is not opaque on this path.

Thus at least the parts of the electrodes comprising the first part of the shell or the second part of the shell are transparent.

The shell need not be in one piece, can comprise e.g. two walls separated by a sealing member, in which case, the inner surface of the first and second walls can define the inner surfaces of the first and second parts of the shell respectively.
23. Item 23: the device of item 22, wherein the first and second electrodes are devoid of a platinum layer acting as a nucleation layer, preferably devoid of a nucleation layer.

As defined herein a nucleation layer is a very thin (less than 10 nm) layer of a metal different from the metal M that at least partially covers the transparent conductive material of the electrode facing the inside of the chamber and reduces the energetical need for deposition of the mirror layer thereon. It is made of a very thin (less than 10 nm) layer of a metal such as gold, platinum, ruthenium, rhodium, palladium, chromium, nickel, tantalum. The layer must be thin otherwise the metal renders the electrode opaque.

A nucleation layer made of platinum is described in US20070195398A1, where nucleation layers are presented as essential.

However, for the present invention, the device does not need a nucleation layer to provide mirror layers having the required properties for an ophthalmic lens.
24. Item 24: the device of item 22 or 23, wherein the device comprises an optical lens, preferably an ophthalmic lens.

As herein defined, an ophthalmic lens is a lens which is designed to be mounted on a frame that can be worn by a wearer in such a way that it places the lens in front of the eye of the wearer. An ophthalmic lens can be used to protect the eye of the wearer or modify his vision (correction of the sight, protection from certain wavelengths, augmented reality, virtual reality, etc.). For example, ophthalmic lenses can be used in visors (such as helmet visors), monocles, or in eyeglasses (including sunglasses, goggles and safety glasses). As defined herein, contact lenses are not ophthalmic lenses. Ophthalmic lenses can be non-corrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses or semi-finished lenses. A semi-finished lens undergoes various treatment steps such as surfacing, coloring, coating and edging before being finally included in eyeglasses or in a monocle. A finished lens is ready to be included in the frame (eyeglasses, visors, a monocle, etc.)
25. Item 25: the device of item 24, wherein the device further comprises a frame, on which the ophthalmic lens is mounted, said frame being configured to be worn by a wearer in such a way that it places the lens in front of the eye of the wearer.
26. Item 26: the device of item 25 or 24, wherein the first face of the device of the invention is the main face of the ophthalmic lens farthest from the eye of the wearer and the second face of the device is the main face of the ophthalmic lens closest to the eye of the wearer.
27. Item 27: the device of item 26, wherein the mirror layer is formed on the first electrode.
28. Item 28: the device of item 27, wherein the device comprises a second transparent substrate between the second face of the device and the second part of the shell.
29. Item 29: the device of item 28, wherein the second transparent substrate is tinted.
30. Item 30: the device of any one of items 22 to 29, wherein the first electrode is made of a transparent conductive oxide.
31. Item 31: the device of item 30, wherein the first electrode is made of indium tin oxide ("ITO"), fluorine-doped tin oxide (FTO).
32. Item 32: the device of item 30 or 31, wherein the second electrode is made of a transparent conductive oxide.
33. Item 33: the device of item 32, wherein the second electrode is made of ITO or FTO.
34. Item 34: the device of any one of items 22 to 33, wherein the shell comprises two main faces and a side wall, said two main faces of the shell comprising the first and second part of the shell and comprising at least a part of the first and the second electrode, and a height of the side wall imposing a distance between the two main faces of the shell, said height being comprised between 10 µm and 400 µm, preferably between 20 and 250 µm, and more preferably between 100 and 200 µm.
35. Item 35: the device of item 34, wherein the first and second main faces of the shell consist of the first and second electrode, respectively.

### Examples

### Electrochromic device

An electrochemical cell made of two substantially flat substrates coated with ITO facing each other and separated by a side wall having a thickness of 150 µm was constructed. The ITO electrodes were connected to an electrical energy source. The gap between the ITO electrodes was filled under vacuum with the following formulations.

### Formulations according to the invention:

| Formulation | Mⁿ⁺ and ligand (30 mM) | Compound C (100 mM) | Supporting electrolyte (250 mM) | Additive 1 | Additive 2 | Solvent |
|---|---|---|---|---|---|---|
| **F1** | Cu(hfacac)₂ | Methylphenothiazine | TBAP | - | Polyvinyl acetate | Propylene carbonate |
| **F2** | Cu(hfacac)₂ | Methylphenothiazine | TBAP | CuTf₂ (5 mM) | Polyvinyl acetate | Propylene carbonate |
| **F3** | Cu(hfacac)₂ | Methylphenothiazine | TBAP | CuTf₂ (10 mM) | Polyvinyl acetate | Propylene carbonate |
| **F4** | Cu(hfacac)₂ | Methylphenothiazine | LiTf | - | Polyvinyl acetate | Propylene carbonate |
| **F5** | Cu(hfacac)₂ | Methylphenothiazine | LiP | - | Polyvinyl acetate | Propylene carbonate |
| **F6** | Cu(tfacac)₂ | Methylphenothiazine | LiTf | - | Polyvinyl acetate | Propylene carbonate |

| | | | | | | |
|---|---|---|---|---|---|---|
| hfacac: hexafluoroacetylacetonate; tfacac : trifluoroacetylacetonate; TBA: tetrabutylammonium; P: perchlorate; Tf: trifluoromethanesulfonate. | | | | | | |

Polyvinyl acetate is present in a concentration of 10% w/w compared to the total solvent mass.

### Comparative formulation (Fc):

- metallic cation: CuCl₂ (50 mM) and SnCl₂ (25 mM)
- ligand: citric acid (80 mM)
- compound C: methylphenothiazine (50 mM)
- Supporting electrolyte: TBAP (250 mM)
- Additive 2: polyvinylacetate (8% w/w compared to the total solvent mass)
- solvent: propylene carbonate (80%), DMSO (20%)

### Results

Formulations F2, F3, F4 and F5 all gave good quality mirror layers, with good reversibility of the system although F2 had slower kinetics than the other.

Formulations F1 and F6 had much slower kinetics for returning to the clear state where the mirror layer is dissolved.

Formulation Fc did not give a mirror layer of a suitable quality (bubbles appeared in the cell upon activation, presumably caused by the presence of either DMSO, citric acid or both) and had even poorer reversibility than F1 and F5.

## Claims

1. Composition comprising, dissolved in a solvent, a reducing compound E, a metal cation Mⁿ⁺, and an organic ligand L able to form a coordination complex with Mⁿ⁺, wherein E does not spontaneously reduce oxidized metal present in the composition, and wherein L comprises the following moiety I: 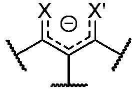 Wherein X and X' are independently selected from O, and

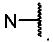

2. The composition of claim 1, wherein the ligand L comprises a fluorinated, preferably polyfluorinated, more preferably perfluorinated alkyl chain.

3. The composition of claim 1 or 2, wherein at least one of X and X', preferably both, are O.

4. The composition of any one of claims 1 to 3, wherein Mⁿ⁺ is chosen from the list consisting of Cu²⁺, Ag⁺, Sn²⁺, Bi³⁺, Al³⁺, Ni³⁺, Pb³⁺, Zn²⁺, and mixtures thereof, preferably Mⁿ⁺ is Cu²⁺ or a mixture of Cu²⁺ and Sn²⁺.

5. The composition of any one of claims 1 to 4, wherein E is an electrochromic compound, which may be oxidized to a compound E*, wherein the maximum of the molar extinction coefficient of E* in the visible range is at least 3 times higher than the maximum of the molar extinction coefficient of E in the visible range, and wherein E comprises a moiety II having the following formula: 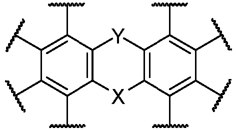 Wherein X and Y are independently selected from the list consisting of O, S, and 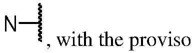 that both X and Y cannot be O, preferably X is S and Y is 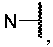 for example E is 10-methylphenothiazine.

6. The composition of any one of claims 1 to 5, wherein the solvent comprises propylene carbonate, γ-butyrolactone or a combination thereof, preferably the solvent comprises at least 70% w/w of propylene carbonate, γ-butyrolactone or a combination thereof relative to the total mass of the solvent in the composition, more preferably the solvent comprises at least 90% w/w of propylene carbonate, γ-butyrolactone or a combination thereof relative to the total mass of the solvent in the composition, even more preferably the solvent is propylene carbonate, γ-butyrolactone or a combination thereof.

7. The composition of any one of claims 1 to 6, wherein the composition comprises a molar amount x_{T} of metal cations, which are as oxidizing as Mⁿ⁺ or less, said metal cations having on average a positive charge n_{T}, wherein the molar amount of moiety I in the composition is x_{I}, and wherein x_{I}/x_{T} is lower than 0.95 × n_{T}, such as of 0.1 to 0.95 × n_{T}, for example of 0.15 to 0.95 × n_{T}, preferably lower than 0.85 × n_{T}, such as of 0.1 to 0.85 × n_{T}, for example of 0.15 to 0.85 × n_{T}.

8. The composition of any one of claims 1 to 7, wherein any anion in the composition other than the ligand L, when the ligand L is anionic, is a non-chelating anion, preferably is a non-chelating anion such that a fully protonated form of said anion is a strong acid, preferably wherein said anion is a non-chelating anion such that the fully protonated form of said anion is a superacid.

9. The composition of claim 7 or 8, wherein the molar amount of moiety I in the composition is x_{I}, the molar amount of Mⁿ⁺ or, where applicable, the least oxidizing of the metal cations in the mixture represented by Mⁿ⁺, in the composition is x_{M}, and x_{I}/x_{M} is lower than 0.95 × n, such as of 0.5 to 0.95 × n, for example of 0.7 to 0.95 × n, preferably lower than 0.85 × n, such as of 0.5 to 0.85 × n, for example of 0.7 to 0.85 × n.

10. The composition of any one of claims 7 to 9, wherein the composition further comprises a metal cation Mₛ^{ns+} less oxidizing than Mⁿ⁺, preferably Mₛ^{ns+} is an alkali metal cation, more preferably Li⁺.

11. A device comprising a first face, a second face, and an electrochemical cell, said electrochemical cell comprising a shell defining a chamber, said chamber comprising the electroactive composition according to any one of claims 1 to 10,
wherein, there is an optical path that successively:
- crosses the first face of the device at a point P1,
- crosses a first part of the shell,
- crosses a second part of the shell, and
- crosses the second face of the device at a point P2;
wherein a first electrode comprises the first part of the shell and a second electrode comprises the second part of the shell,
said device further comprising means to apply a tension between the first and the second electrodes, said means being configured to be able to maintain the electrochemical cell in at least two different states S0 and S1;
wherein:
• In S0, no electric energy is applied to the electrochemical cell, and
• In S1, an electric tension U1 is applied such that at least part of compound E present in S0 is oxidized in the compound E* and at least part of Mⁿ⁺ present in S0 is reduced to form a mirror layer comprising the metal M on either the first electrode or the second electrode and covering the first part of the shell or the second part of the shell, respectively.

12. The device of claim 11, wherein the first and second electrodes are devoid of a platinum layer acting as a nucleation layer, preferably devoid of a nucleation layer.

13. The device of claim 11 or 12, wherein the device comprises an optical lens, preferably an ophthalmic lens.

14. The device of claim 13, wherein the device further comprises a frame, on which the ophthalmic lens is mounted, said frame being configured to be worn by a wearer in such a way that it places the lens in front of the eye of the wearer.

15. The device of claim 13 or 14, wherein the first face of the device of the invention is the main face of the ophthalmic lens farthest from the eye of the wearer and the second face of the device is the main face of the ophthalmic lens closest to the eye of the wearer and wherein the mirror layer is formed on the first electrode.
